# EUROPEAN PATENT APPLICATION

(11) **EP 0 605 085 A1**
(43) Date of publication of application: **06.07.1994**
(21) Application number: 93307158.1
(22) Date of filing: 10.09.1993
(51) Int. Cl.: F16L 55/162, F16L 55/18

(54) **Method and apparatus for repairing the pipe inner surface by resin coating**

(30) Priority: 29.12.1992 JP 361051/92; 15.03.1993 JP 78555/93; 29.03.1993 JP 93662/93; 01.07.1993 JP 190780/93
(71) Applicant: SUMIYOSHI MANUFACTURING Co. Ltd., Kusatsu-shi, Shiga-ken 525 (JP)
(72) Inventor: Wakabayashi, Tadashi, Kusatsu-shi, Shiga-ken 525 (JP)
(74) Representative: Wilkinson, Stephen John

(57) **Abstract**

This invention relates to a method and an apparatus for repairing the pipe inner surface by resin coating.

A pipeline inner wall repair device (A) is movable in the pipeline (13) and has a rubber tubular body (5) which is expanded by supply of compressed air and is pressed against the inner surface of pipeline (13), a heater (7) for heating said rubber tubular body (5) and a thermo-sensor (8). After a mending material (M) is attached to the outer circumferential surface of the rubber tubular body (5), the repair device (A) is moved to a broken part in the pipeline (13) by hauling a wire (10) through guidance by a television camera (16) moving in the pipeline (13), the rubber tubular body (5) is expanded by supply of compressed air thereto and presses its outer circumferential surface against the inner wall of pipeline, whereby the mending material (M) is pressed against the broken part of pipeline (13) and the outer circumferential surface of the rubber tubular body (5). The ambient temperature of the mending material is measured and inputted in the control unit (B), temperature of the mending material (M) is maintained at a specified temperature range by controlling heating by the heater (7) and the mending material (M) is heated for a specified period of time to harden. Thus, the inner surface of pipeline (13) is repaired by resin coating.

## Description

### BACKGROUND OF THE INVENTION

### 1. Field of the invention:

This invention relates to a technique of repairing the internal defects, such as breaks, cracks, connecting deficiencies, etc. of small-bore sewer pipes and other underground pipes that are difficult to inspect or repair from outside by coating the defective pipe inside wall with resin.

### 2. Description of the prior art:

Regarding the technique of repairing the pipe interior by coating with resin, there has been known "The method of lining the pipe inside surface with a hard tube" (Japanese Patent Application Laying Open Gazette No.3-178425). According to this method, a resin tube is inserted into the pipeline and is pressurized to expand and press against the inside wall of pipeline. Then, the resin tube is heated to harden and thus the inner surface of pipeline is coated with a resin tube.

Although the above known technique is suitable for repairing the entire inner wall of pipeline, there is the problem that it is not economical for repairing the limited part of pipeline.

Apart from the above, since sewer pipes are embedded in places of different conditions, underground temperatures around pipelines to be repaired vary and also as it is required to keep the temperature rise within the specified limits so as to prevent degradation of a rubber tubular body provided in a pressuring type repairing apparatus, it is desired to keep the temperature of a part to be repaired within the specified range.

### SUMMARY OF THE INVENTION

### 1. Object of the invention:

The first and the second inventions of the present application have for their object to make it possible to coat with resin a limited part of the inner wall of pipeline economically and to keep the temperature of a part to be repaired within the specified range.

In the above first and second inventions, a heater for heating the rubber tubular body is provided as a heating structure for a mending material which is pressed against the inner wall of pipeline, but the third and the fourth inventions of the present application have for their object to simplify the above heating structure for a mending material and to enhance heating efficiency.

The fifth and the sixth inventions of the present application have for their object to make it possible to select and limit freely the position of resin coating repair of pipeline inner wall with a mending material in circumferential direction of pipeline in the above first to fourth inventions.

The seventh invention of the present application has for its object to apply the sixth invention of the present application to a repair part of the pipeline inner surface at a connection between a main pipe and a branch pipe, namely, to press a mending material securely and strongly against the pipeline inner wall at a connection between a main pipe and a branch pipe , thereby resin-coating perfectly the pipeline inner wall at the connection.

In the above seventh invention, by bulging of the rubber tubular body into a branch pipeline, a deformed area of a mending material is projected toward the side of the branch pipeline and the mending material is pressed in crooked state against the inner wall of pipeline at a connection between the main pipe and the branch pipe for resin-coating. Therefore, there is the problem that residual distortion is caused in the rubber tubular body and durability of the rubber tubular body lowers.

In view of the above problem, the eighth invention of the present application has for its object to reduce residual distortion caused by bulging deformation of the rubber tubular body corresponding to the deformed area of a mending material.

### 2. Means of attaining the above object:

The first invention of the present application comprises a pipeline inner wall repair device A which includes a a cylindrical body 1 of double cylindrical structure having an inner tube 2 and an outer tube 3, an annular chamber C formed between the inner tube 2 and the outer tube 3 with discs 4 fixed to both ends of the cylindrical body 1, a through-chamber D formed at the inner center of the cylindrical body 1, a rubber tubular body 5 united with the cylindrical body 1 by a band 6 or other means, a pressurizing chamber E formed between the rubber tubular body 5 and the cylindrical body 1, a heater 7 wound around the outer circumferential surface of the outer tube 3 for heating the pressurizing chamber E, a thermo-sentor 8 provided in the annular chamber C and a hauling fitting 9 fixed to the disc 4 and a control unit for maintaining the ambient temperature of a mending material at the temperature of a specified range by measuring the ambient temperature of the mending material by the thermo-sensor 8 and by controlling the heating by the heater 7. By the above control unit, the mending material is hardened by heating it for a specified period of time while keeping its temperature at a specified temperature range.

In the second invention, a pipeline inner wall repair device is movable in the pipeline and has a rubber tubular body which is expanded by supply of compressed air and is pressed against the inner surface of pipeline, a heater for heating said rubber tubular body and a thermo-sensor. After a mending material is attached to the outer circumferential surface of the rubber tubular body, the repair device is moved to a broken part in the pipeline by hauling a wire through guidance from a television camera moving in the pipeline, the rubber tubular body is expanded by supply of compressed air thereto and presses its outer circumferential surface against the inner wall of pipeline, whereby the mending material is pressed against the broken part of pipeline and the outer circumferential surface of the rubber tubular body. The ambient temperature of the mending material is measured and inputted in the control unit, temperature of the mending material is maintained at a specified temperature range by controlling heating by the heater and the mending material is heated for a specified period of time to harden. Thus, the inner surface of pipeline is repaired by resin coating.

In the third invention, heating of the mending material is done by a surface heating body embedded in the mending material.

In the fourth invention, the mending material is heated directly by supply of electricity to the surface heating body embedded in the mending material and the surface heating body is left in the repaired part as it is embedded in the mending material.

In the fifth invention, the cylindrical body and the rubber tubular body of the pipeline inner wall repair device (in the first invention) are made rotatable freely in the pipeline by remote control.

In the sixth invention, by rotation of the cylindrical body and the rubber tubular body of the pipeline inner wall repair device (in the second and the fourth inventions) in the pipeline by remote control, the centre position of the mending material can be selected freely in circumferential direction of pipeline.

In the seventh invention, the mending material with a deformed area for resin coating by pressing against the inner wall of pipeline, according to the sixth invention, is used. The deformed area of the mending material is moved to the position opposing the branch pipe by rotating the rubber tubular body so as to project the deformed area of the mending material toward the side of branch pipeline and to press the mending material in crooked state against the inner wall of pipeline at a connection between the main pipe and the branch pipe for resin coating.

In the eighth invention, prior to the movement of the pipeline repair portion, a protector of knit structure is wound around the rubber tubular body and inflating deformation of the rubber tubular body corresponding to the deformed area of the mending material is restricted to a specific limit.

### 3. Advantageous effect of the invention:

The first invention and the second invention of the present application produce such advantageous effect that a perfect resin-coating repair can be carried out at low cost by resin-coating only a broken portion in the pipeline by remote control and also by hardening a mending material securely, regardless of the ambient temperature of the repair portion of pipeline, while maintaining the mending material at the optimum temperature range. Moreover, by controlling the maximum temperature of a pressuring chamber, degradation of rubber of the rubber tubular body can be prevented and the pipeline inner wall repair device can be used semi-permanently.

The third and the fourth inventions of the present application produce such advantageous effect that heating efficiency can be enhanced by heating the mending material directly through applying electricity to a surface heating body embedded in the mending material. Also, strength of the mending material is enhanced by the surface heating body embedded in the mending material being left within the mending material at the repaired portion and therefore perfect resin-coating repair is done.

The fifth and the sixth inventions of the present application produce such advantageous effect that resin-coating repair portion of the inner surface of pipeline can be limited and selected in the circumferential direction of pipeline by rotating a cylindrical body and a rubber tubular body of the pipeline inner wall repair device in the pipeline through remote-control.

The seventh invention of the present application produces such advantageous effect that perfect resin-coating repair of a connection between a main pipe and a branch pipe can be done by resin-coating the pipeline inner wall of a connection between a main pipe and a branch pipe with a curved mending material having a deformed area which is bent to the branch pipe side at the connection and presses against the pipeline inner wall of the branch pipe.

The invention of the present application produces such advantageous effect that by controlling the bulging deformation of a rubber tubular body opposing a deformed area of a mending material to a specified limit, repair work efficiency is stabilized, residual distortion of the rubber tubular body is reduced, durability of the rubber tubular body is enhanced, and resin-coating repairing cost of the pipeline branch portion is reduced.

### BRIEF DESCRIPTION OF THE DRAWINGS

The nature and advantage of the present invention will be understood more clearly from the following detailed description of the invention made with reference to the accompanying drawings, in which:
Fig. 1 is a longitudinal section of a pipeline inner wall repair device, showing an embodiment of the first invention of the present application, in which the left-hand portion shows the state where a rubber tubular body is not pressurized and the right-hand portion shows the state where a rubber tubular body is pressurized.
Fig. 2 is a longitudinal section of a pipeline in lengthwise direction, illustrating the pipeline inner wall repairing work according to the second invention of the present application.
Fig. 3 is a longitudinal section of a pipeline inner wall repair device of the second invention of the present application.
Fig. 4 is a plan view of a mending material to be used for the fourth invention of the present application.
Fig. 5 is a section of a pipeline, showing the state of the pipeline inner wall repaired according to the fourth invention of the present application, in which (a) shows the case where the width of a mending material is shorter than the inner circumferential surface length of the pipeline, (b) shows the case where the width of a mending material is almost the same as the inner circumferential length of the pipeline and (c) shows the case where the width of a mending material is longer than the inner circumferential surface length of the pipeline.

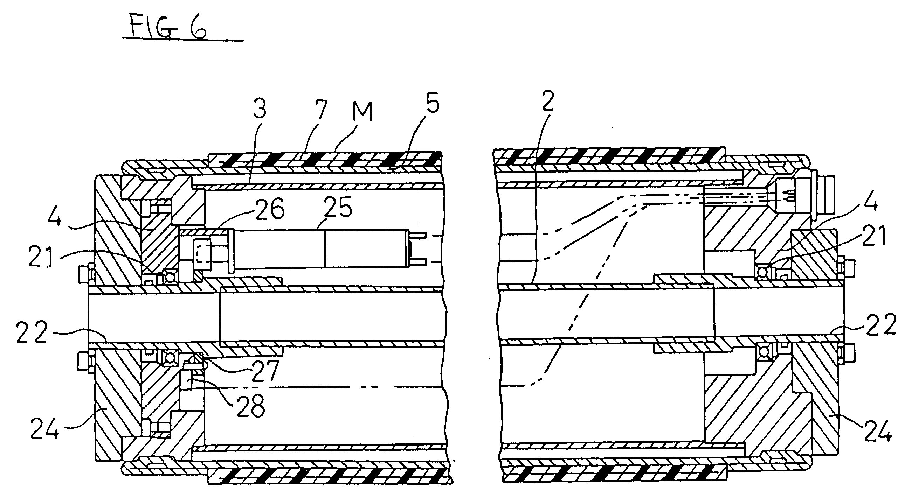

Fig. 6 shows a longitudinal section of a pipeline inner wall repair device, showing an embodiment of the fifth invention of the present application.

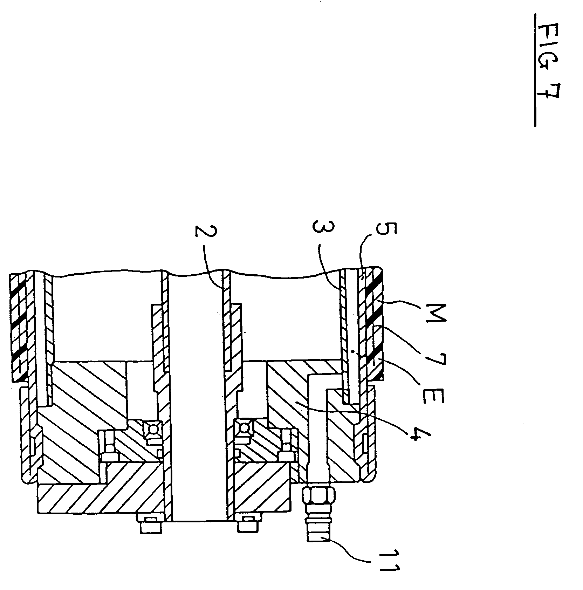

Fig. 7 is a longitudinal section of a part of an air supply construction of the fifth invention.

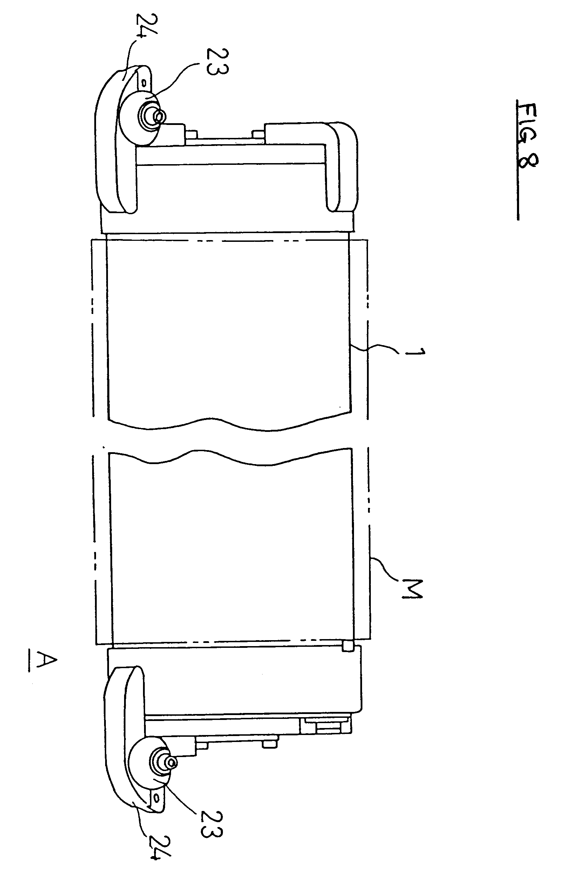

Fig. 8 is a front view of a part of the air supply construction.

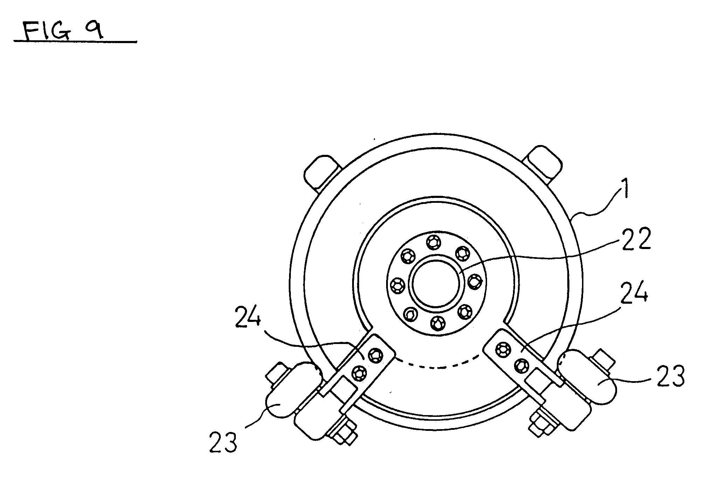

Fig. 9 is a side view of a part of the air supply construction.
Fig. 10 is a plan view of a mending material to be used for the sixth invention of the present application, in which (a) shows the formation of a radial cutting-plane line, (b) shows the formation of a central through-hole and (c) shows the formation of a central through-hole and broken line parts.
Fig. 11 shows the deformation of the rubber tubular body and the mending material, in longitudinal section of the pipeline, at the pipeline inner wall repairing work according to the sixth invention of the present application, in which (a) shows the state before deforming and (b) shows the state being deformed.
Fig. 12 shows the deformation of the rubber tubular body and the mending material, in cross section, at the pipeline inner wall repairing work according to the sixth invention of the present application, in which (a) shows the state before deforming; (b) shows the state being deformed and (c) shows the state where the repair work was finished.
Fig. 13 is a plan view of a mending material, similar to Fig. 10, showing an embodiment in which the repairing range of the pipeline inner surface is a part of the circumference of a pipeline.
Fig. 14 is a sketch showing an example of the pipeline inner wall repairing according to the combination of the sixth invention and the second invention of the present application, in which the upper (a) shows the case where the mending operation with a mending material M precedes the mending operation with a mending material N for a branch connection and the lower (b) shows the case where the mending operation with a mending material N for a branch connection precedes the mending operation with a mending material M.
Fig. 15 shows the deformation of the rubber tubular body, a protecter and the mending material, in longitudinal direction of a pipeline, at the pipeline inner wall repairing work according to the seventh invention of the present application, in which (a) shows the state before deforming and (b) shows the state being deformed.
Fig. 16 shows the protecter shown in Fig. 15(a), in which (a) is a developed plan view and (b) shows a longitudinal section at the center line of (a).
Fig. 17 shows the protecter shown in Fig. 15(b), in which (a) is a developed plan view and (b) is a longitudinal section at the center line of (a).
Fig. 18 is another embodiment of the protecter according to the seventh invention of the present application, in which (a) is a developed plan view and (b) is a vertical section at the center line of (a).

### DETAILED DESCRIPTION OF EMBODIMENTS OF THE INVENTION

The present invention is described below with reference to the accompanying drawings.

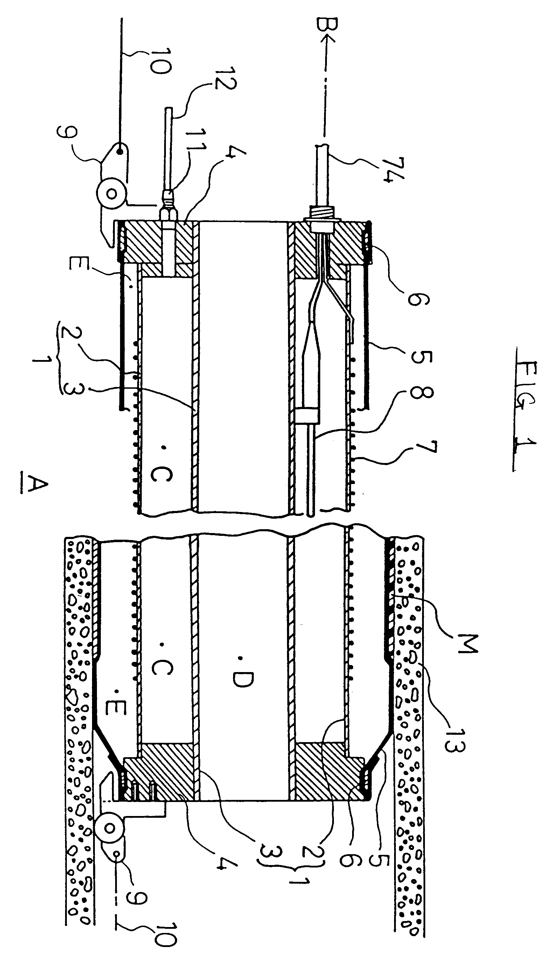

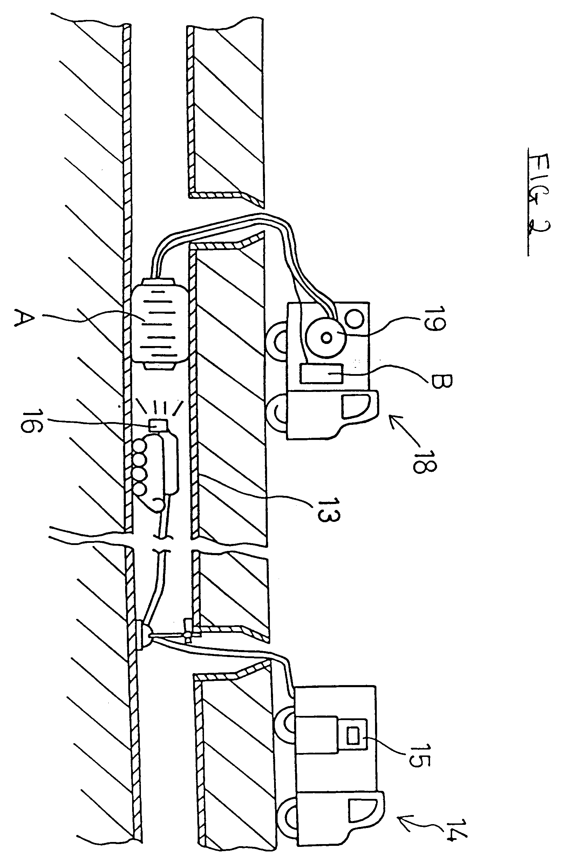

Embodiments of the first invention and the second invention are described below with reference to Fig. 1 and Fig. 2.

Fig. 1 shows a pipeline inner wall repair device A of an embodiment of the first invention of the present application. This device A comprises a cylindrical body 1 of double cylindrical construction (an inner tube 2 and an outer tube 3), discs 4 fixed at both ends of the cylindrical body 1 by welding or other means, an annular chamber C formed between the inner tube 2 and the outer tube 3, a through-chamber D at the inner center side of the cylindrical body 1, a pressurizing chamber E formed between the outer tube 3 and a rubber tubular body 5 which is united with the cylindrical body 1, a heater 7 wound around the outer circumferential surface of the outer tube 3 for heating the pressurizing chamber E, a thermo-sensor 8 provided in the annular chamber C and a hauling fitting 9 fixed to the disc 4.

In the above embodiment, the thermo-sensor 8 is provided in the annular chamber C but can be fixed in the inner tube 2 or can be provided in the pressurizing chamber E for sensing the temperature of a mending material M by measuring the temperature of the inner tube 2 or the pressuring chamber E. It is also possible to fix the thermo-sensor 8 at the inner surface side of the rubber tubular body 5 which makes contact with the mending material M for measuring the temperature of the mending material M through the medium of the rubber tubular body 5.

The above pipeline inner wall repair device A can be moved freely in the pipeline by hauling a wire 10 by a winch or other means. One end of the wire 10 is connected to a hauling fitting 9. A compressed air supply hole 11 is provided at the disc 4 and by supplying compressed air by an air hose 12 connected to the compressed air supply hole 11, the rubber tubular body 5 is expanded, whereby the pressurising chamber E is enlarged and the rubber tubular body 5 is pressed against the inner surface of a pipeline 13.

The heater 7 and the thermo-sensor 8 of the pipeline inner wall repair device A are connected to an outside control unit B above the ground by a 5-core wire cord 14. Of the 5 core wires, three core wires are for measuring by the thermo-sensor 8 and the remaining two are for supplying electricity to the heater 7. In the embodiment, electric distribution to the heater 7 is made by AC 100V or AC 220V wiring but in the case where low voltage wiring is required, other electric distribution systems, such as DC 24V, DC 12V, etc. can be applied.

The mending material M to be used for mending the pipeline inner wall, when working the invention, is a synthetic resin mat obtained by soaking core material of glass or carbon fibers uniformly in a binder of unsaturated polyester resin, epoxy resin or lipoxy resin. The strength and thickness of the mending material M is adjusted by varying the amount of the core material and the binder resin used.

In repairing the pipeline inner wall according to the second invention of the present application, the mending material for a branch connection part M (in mat state) is wrapped around the outer circumference of the rubber tubular body 5. In order to prevent the mending material for a branch connection part from adhering to the surface of the rubber tubular body 5, grease (oil) or adhesion preventive sheet is interposed between the rubber tubular body 5 and the mending material M for a branch connection part. After the mending material M for a branch connection part was rapped around the outer circumference of the rubber tubular body 5, the pipeline inner wall repair device A is inserted into the pipeline 13 and is moved in the pipeline 13 to the defective part by hauling the wire 10 by a winch 19 or some other means. At this time, the pipeline inner wall repair device A is hauled to the defective part of the pipeline inner wall (part to be repaired) by sensing the defective part by a monitor television 15 in a work monitoring car 14 above the ground on the basis of picture signals from a TV camera 16 which monitors the pipeline inner wall.

After it was confirmed by the monitor television 15 that the pipeline inner wall repair device A was hauled to the pipeline inner wall defective portion (part to be repaired) and the mending material M opposed the broken part in the pipeline, compressed air is sent into the pressuring chamber E of the pipeline inner wall repair device A.

Supply of compressed air to the pressurizing chamber E is continued until the rubber tubular body 5 is pressed against the inner surface of the pipeline 13, whereby the mending material M is pressed between the rubber tubular body 5 and the inner surface of the pipeline 13 and sticks fast to the inner surface of the pipeline 13. If this state is maintained for a specified period of time, the mending material M hardens but if the ambient temperature is low, hardening requires a longer time and becomes unstable. Therefore, heating by the heater 7 is carried out to stabilize hardening and shorten the hardening time. The mending material M is maintained at the temperature of the specified range by remote-controlling the heating by the heater 7, through the medium of the control unit B, after measuring the temperature of the annular chamber C (or the rubber tubular body 5, the mending material M, etc.) by the thermo-sensor 8. When the mending material M hardens with the lapse of the specified time, it sticks fast to the pipeline inner wall defective part (part to be repaired) and thus the pipeline inner wall repairing work according to the first invention of the present application is completed.

After the repairing work of the part to be repaired was completed, electric supply to the heater 7 is stopped and compressed air is let out of the pressurizing chamber E, whereby the rubber tubular body 5 shrinks and the surface of the rubber tubular body 5 is separated from the inner surface of the pipeline 13. Thus, the pipeline inner wall repair device A is made movable. Then, the pipeline inner wall repair device A is moved to the next defective part of the pipeline inner wall by hauling the wire by a winch or the like for continuing the pipeline inner wall repairing work or the pipeline inner wall repair device A is pulled up to the ground to finish the repairing work.

At the pipeline inner wall repairing work, the mending material M can be hardened securely and perfect resin-coating mending can be carried out, regardless of the temperature around the defective part of the pipeline, by hardening resin while keeping the ambient temperature of the mending material M at the optimum temperature. Also, rubber degradation of the rubber tubular body 5 can be prevented by regulating the optimum temperature.

The existence of the through-chamber D enables us to carry out the repairing work in water running through state and also enables us to check hardening of the mending material while the pipeline inner wall repair device is being moved (while the mending material is being set to the repair part of the pipeline inner wall).

In the embodiment, the pipeline inner wall repair device is moved by the hauling wire system but can be moved by the remote-controlled self-running system (robot system).

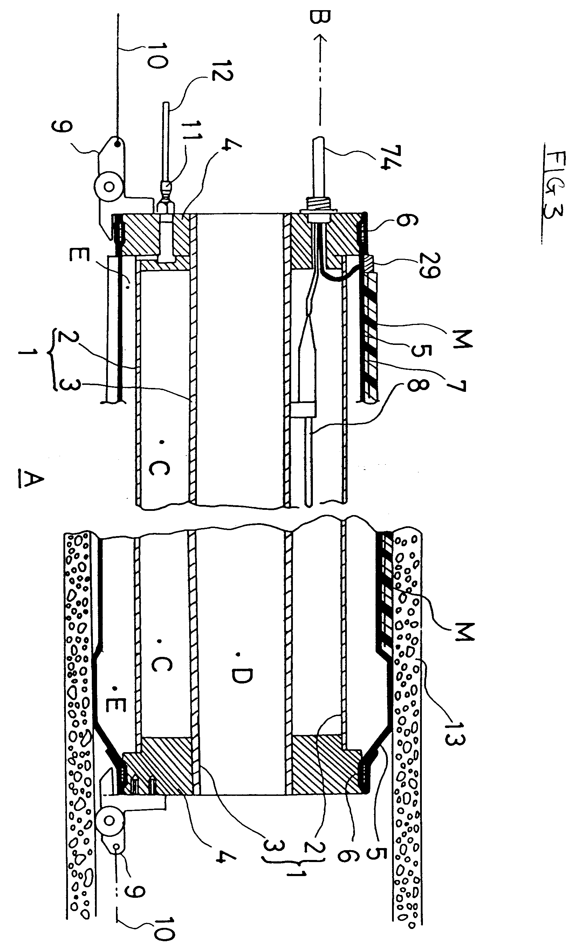

The third invention and the fourth invention of the present application are described below, with reference to Figs. 3, 4 and 5.

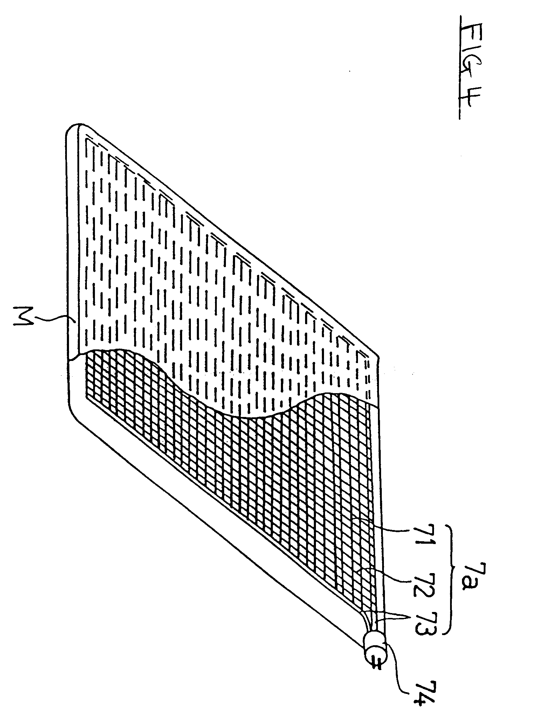

In the first and the second inventions mentioned above, the pressurizing chamber E is heated by the heater wrapped around the outer circumference of the outer tube 3 but instead of the heater provided in the pressurizing chamber E, the mending material M is provided at its inner surface with a surface heating body 7a, as shown in Fig. 4.

Referring to Fig. 3, in the pipeline inner wall repair device A of an embodiment of the third invention a connection terminal 29 which is connectable to a connection plug 74 of the surface heating body 7a of the mending material M is fixed to the outer surface of an end of the rubber tubular body 5 so as to supply electricity to the surface heating body 7a provided in the mending material M.

The above connection terminal 29 of the pipeline inner wall repair device A is connected, together with the thermo-sensor 8, to the outside control unit B above the ground through the medium of the 5-core wire cord 14 and thus the surface heating body 7a is supplied with electricity under the control by the control unit B.

Fig. 4 shows the embodiment of the surface heating body 7a. The surface heating body 7a which is like a heater used for a hot carpet, a floor heating mat, etc. is coated at its surface and back with a mending material M, namely, the surface heating body 7a is in the state of being embedded in the mending material M. A plug 74 to be connected to the connection terminal 29 of the pipeline inner wall repair device A is protruded from an end of the mending material M and a heater wire 71 is connected to the plug 74 by a lead wire 73. The surface heating body 7a is made of woven fabric of thread-like heater wire 71 and weft yarn. It is bendable and foldable.

In the repair work of the pipeline inner wall according to the fourth invention, action and effect which are different from those of the second invention are obtained by stabilizing hardening and shortening hardening time of the mending material M by heating the mending material M through supply of electricity to the surface heating body 7a. However, movement of the pipeline inner wall repair device A and other operations of the pipeline inner wall repair device A, such as supply of compressed air to the pressurizing chamber E, adhering the mending material M to the inner surface of the pipeline, etc. are the same as in the case of the first invention.

The mending material M is kept within the range of the specified temperature by remote-controlling the heating by the surface heating body 7a through the medium of the control unit B, while measuring the temperatures of the annular chamber C, the rubber tubular body 5, the mending material M, etc. by the thermo-sensor 8.

When the mending material M hardens with the lapse of the specified time, the mending material M sticks fast to the defective portion (portion to be repaired) of the pipeline inner wall and thus the repairing work of the pipeline inner wall according to the third invention is completed.

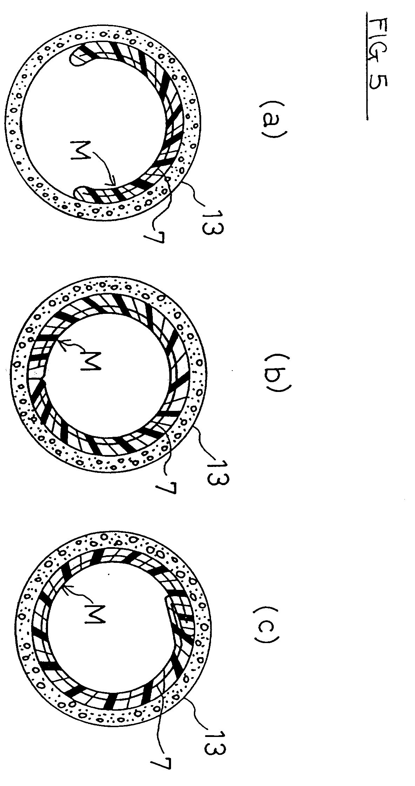

After the repair work of the pipeline inner wall was completed, the pipeline inner wall repair device A is moved from the repaired portion, whereupon the connection plug 28 of the mending material M comes off the connection terminal 29 of the pipeline inner wall repair device A and both the surface heating body 7a and the mending material M remain as they are stuck to the repaired portion of the pipeline inner wall. Depending upon the relation between the diameter of the pipeline inner wall repaired portion and the width of the mending material M, repaired state of the pipeline inner wall varies as shown by Fig. 5(a), (b) and (c), but in any case the surface heating body 7a is always enclosed with the mending material M and is not exposed. Therefore, a repaired portion of the pipeline inner wall is completely coated with resin by the mending material M and the function as pipeline is not hindered. Moreover, strength of the mending material M is increased by unification of the surface heating body 7a with the mending material M.

The sixth invention is the same as the second invention or the fourth invention in that the pipeline inner wall repair device A is moved in lengthwise direction of the pipeline to the desired repair portion in the pipeline and the mending material M is heated by electricity supply to the heater 7 or the surface heating body 7a, but according to the sixth invention, when the pipeline inner wall repair device A was moved in lengthwise direction of the pipeline to the desired repair portion in the pipeline, the cylindrical body 1, the rubber tubular body 5 united with the cylindrical body 1 and the mending material M are turned in circumferential direction of pipeline to locate the center of the mending material M at a repair portion in circumferential direction of pipeline by electricity supply to the motor 25 on the basis of control by the control unit B on the ground.

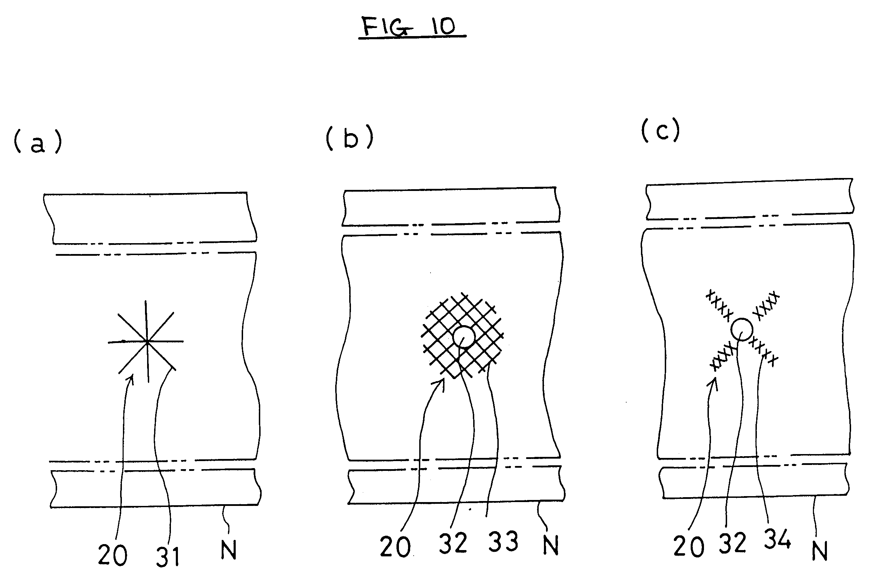

The seventh invention of the present application is described below, with reference to Fig. 10 - Fig. 14.

Repair of the pipeline inner wall according to the seventh invention is applied to a connection part of branch pipe, namely, breakage, cracks, etc. at a connection part between a main pipe and a branch pipe are repaired by resin coating of the inner surface of pipeline.

Fig. 10 shows a mending material N for a branch connection part to be used in carrying out the seventh invention. The mending material N is different from the mending material M (used for the second invention, the fourth invention and the sixth invention) in that it has a deformed area at its central part but the composition as mending material is not different.

In the embodiment of Fig. 10(a), a deformed area 20 comprises a plurality of cutting-plane lines 31 which make it possible to fold the center part of the mending material N for a branch connection part to the front side or the rear side.

In the embodiment of Fig. 10(b), the deformed area 20 has a central through-hole 32 and a thin or soft deformed part 33 around the through-hole 32.

In the embodiment of Fig. 10(c), the deformed area 20 has a central through-hole 32 and a plurality of thin and soft broken lines 34 around the circumference of the through-hole in radial direction.

In working the seventh invention of the present application, the pipeline inner wall repair device A to be used for the fifth invention is used. The cylindrical body 1, the rubber tubular body 5 and the mending material N are turned freely by remote-control operation and a repair portion of the inner surface of pipeline is made selective in circumferential direction of the pipeline. A mending material N for a branch connection having a deformed area 20 is mounted on the rubber tubular body 5 of the pipeline inner wall repair device A.

As in the case of the second invention, the pipeline inner wall repair device A provided with the mending material N for a branch connection is moved to a repair portion (branch pipe connection part) by travelling means of remote control, such as a hauling wire system, a self-travelling by remote control (robot system).

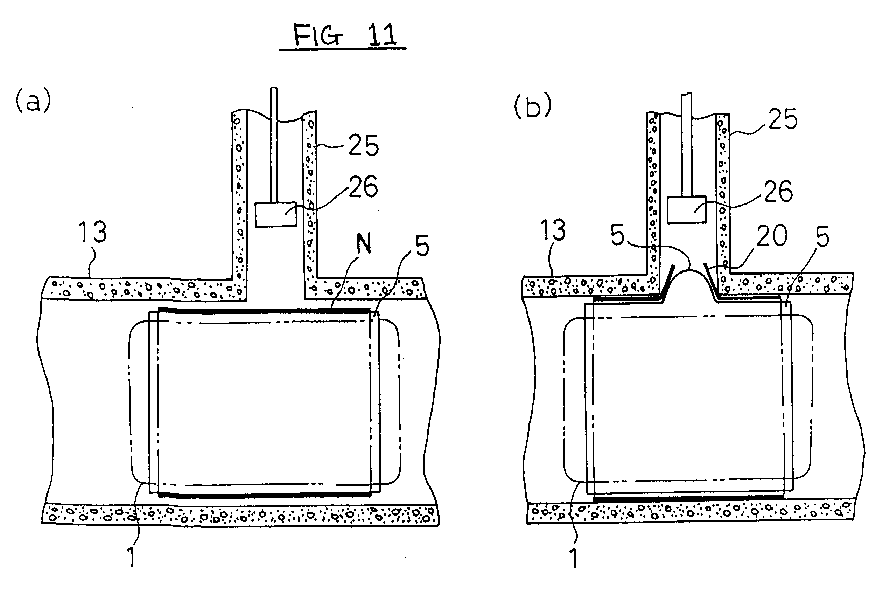

A monitor television 26 is inserted into a branch pipe 25 at a branch pipe connection part (repair part). (Refer to Fig. 11(a)).

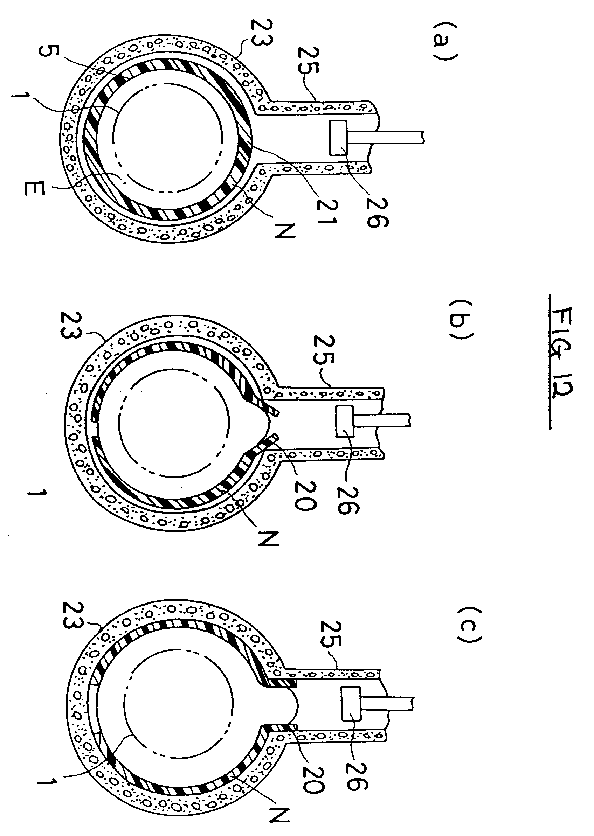

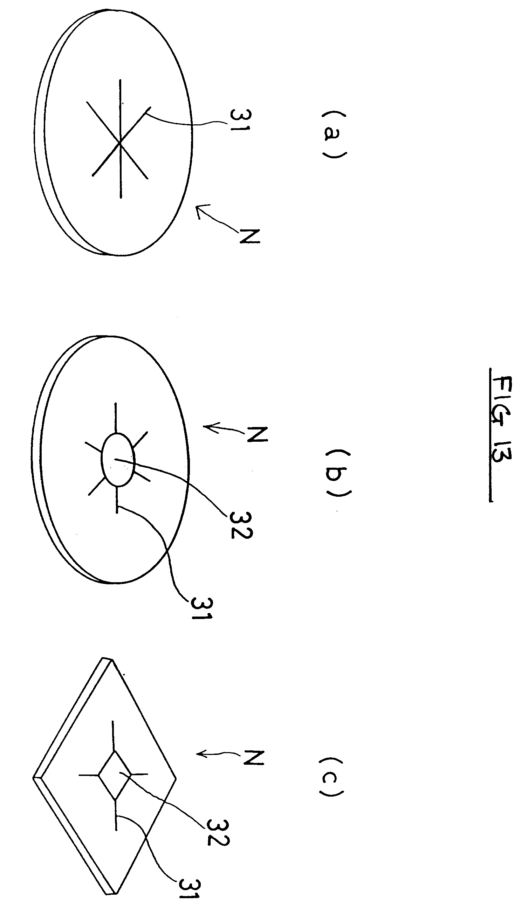

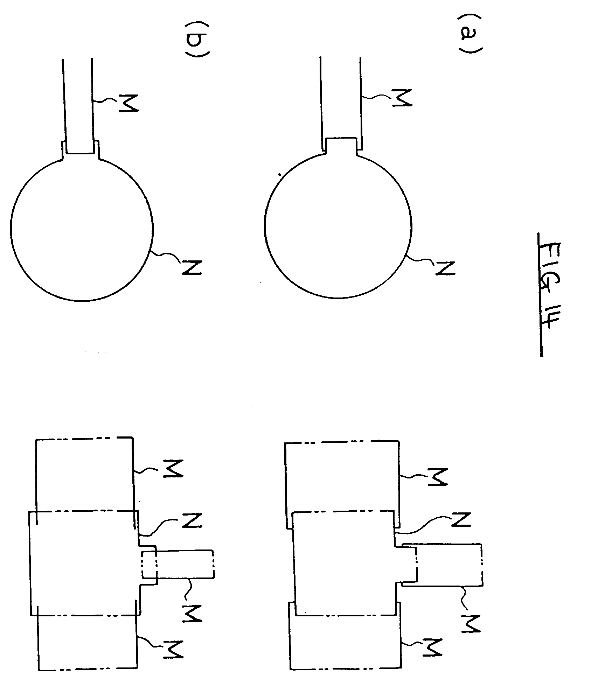

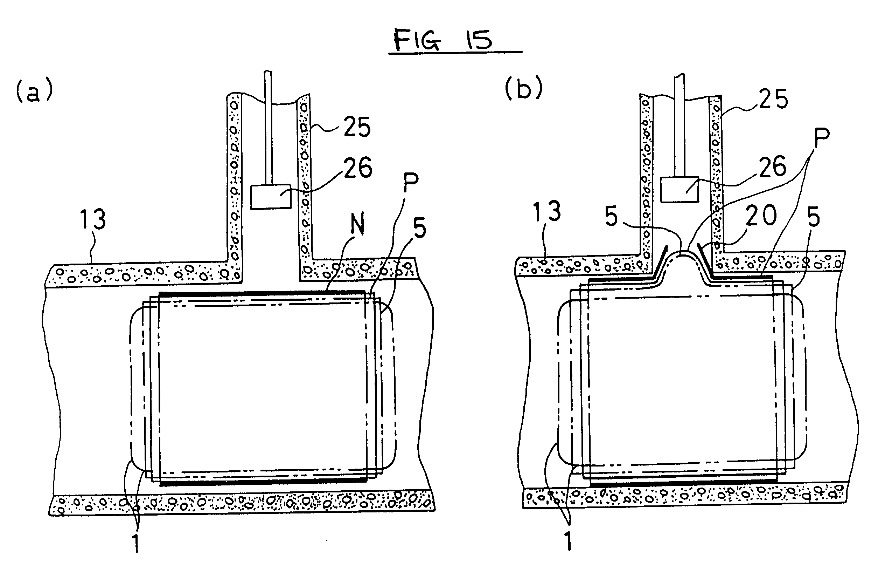

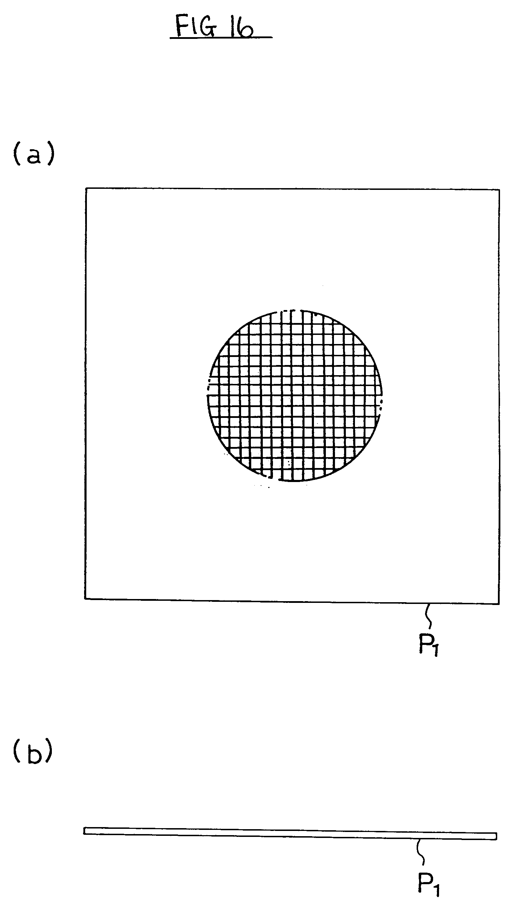

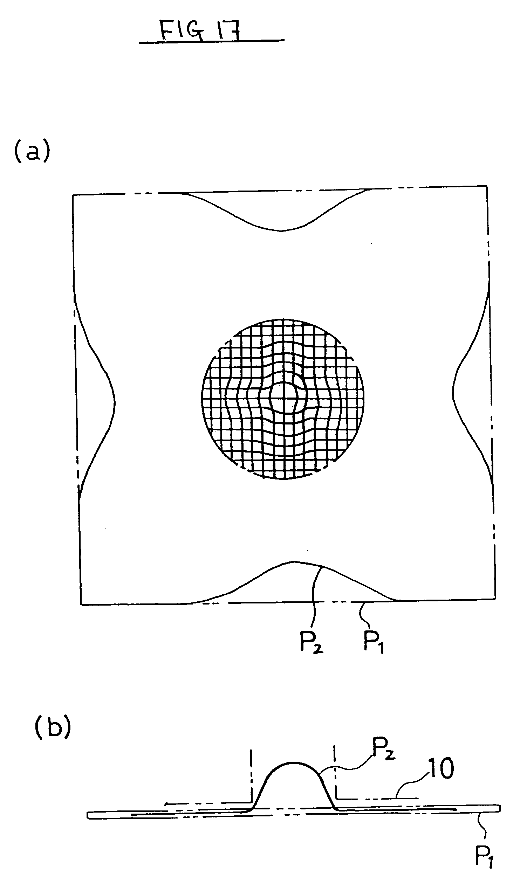

The cylindrical body 1 of the pipeline inner wall repair device A is turned by supplying electricity to the motor, while confirming by sight that the surface of the mending material N opposes the end portion of the branch pipe 25 by the monitor television 26 and the deformed area 20 of the mending material N is located oppositely to the branch pipe 25. (Refer to Fig.12(a) ).

After it was confirmed by the monitor television 26 that the deformed area of the mending material N opposed the broken part of the branch pipe 25 at the branch pipe connection part, compressed air is supplied into the pressurizing chamber E of the pipeline inner wall repair device A.

Supply of compressed air to the pressurising chamber E is continued until the rubber tubular body 5 presses against the inner surface of the pipeline 13. Further supply of compressed air to the pressurizing chamber E makes the rubber tubular body 5 opposite to the branch pipe 25 project into the branch pipe 25. By this projection of the rubber tubular body 5 into the branch pipe 25, the deformed part 20 of the mending material N is pushed into the branch pipe 25 and is deformed, whereby the central part of the deformed part 20 is opened (or the central through-hole 32 is enlarged) and the circumferential part of the deformed part 20 bends as if it opposed the branch pipe 25 (refer to Fig. 11(b) and Fig. 12(b) ).

Further supply of compressed air into the pressurizing chamber E increases the amount of projection of the rubber tubular body 5 into the branch pipe 25 and consequently increases the bending of the deformed part 20 of the mending material N toward the side of the branch pipe 25. Finally, the deformed part 20 of the mending material N is pressed between the rubber tubular body 5 and the inner surface of the branch pipe 25 and sticks fast to the inner surface of the branch pipe 25 (refer to Fig.12(c) ).

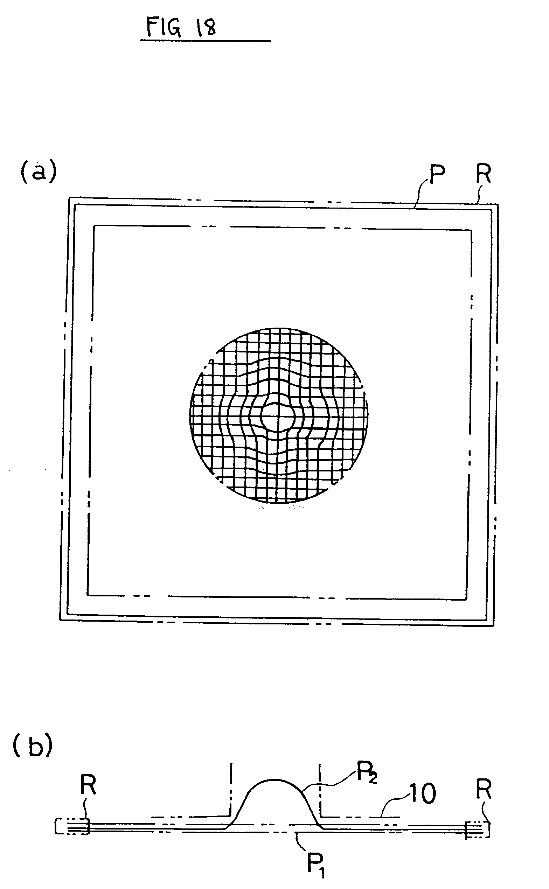

Since the repair of the pipeline inner wall according to the seventh invention is applied to the branch pipe connection part, the object of the seventh invention can be attained by using the mending material N for a branch connection part shown in Fig. 13, instead of the mending material N for a branch connection part shown in Fig. 10, and by making the repairing range of the inner surface of pipeline a part of the circumference of pipeline.

The connection of the mending material M according to the sixth invention to the mending material N according to the second invention and the fourth invention can be set up arbitrarily but Fig. 14 shows the case where both mending materials M, N are overlapped. Fig. 14(a) shows that the repairing operation with the mending material N for a branch connection part is preceded by the repairing operation with the mending material M and Fig. 14(b) shows that the repairing operation with the mending material M for a branch connection part is preceded by the repairing operation with the mending material N.

The eighth invention of the present application comprises the steps of mounting a cylindrical or sheet-like protector P of knit structure on the outer circumferential surface of the rubber tubular body 5 of the pipeline inner wall repair device A, interposing the protector P between the mending material M for resin coating and the rubber tubular body 5, drawing the pipeline inner wall repair device A into the pipeline and moving it to a repair portion in the pipeline. Operations thereafter are the same as in the case of each invention mentioned before. (Refer to Fig. 15).

The protector P has knit structure based on the knitting design in which extension of the rubber tubular body 5 in lengthwise direction and in diametrical direction suitable for the bulging control measurements which control the bulging limit of the rubber tubular body 5 is calculated thoroughly. An example is shown below.
- Material:: Nylon 100%
- Structure:: Smooth knit of cylindrical shape and 38cm in diameter. (two-ply yarn of nylon 70-denier is used)
- Metsuke (weight per unit area):: 200g/m²
If the protector P is made in cylindrical shape slightly smaller than the outer shape of the rubber tubular body 5 and is made elastically contractile, the protector P will have better adhesion to the outer circumferential surface of the rubber tubular body 5 and detaching from/attaching to the rubber tubular body 5 is easier. Also, when the pipeline inner wall repair device A is moved after the repairing work with the mending material M was finished, the protector P moves as it sticks fast to the rubber tubular body 5. Thus, detaching from the mending material M united with the inner surface of pipeline wall is done accurately and easily.

Fig. 16 shows the protector in developed flat shape when the rubber tubular body 5 does not bulge partially as yet. As shown in Fig. 17, due to partial bulging of the rubber tubular body 5, a partially bulging part of the rubber tubular body 5 varies from P₁ to P₂. Deformation at this time is limited by the extension margin of material and limitation on the amount of movement of material toward the central deformed part due to knit structure.

Limits on partial bulging of the rubber tubular body 5 is set by the deformation limits on the protector P.

Fig. 18 shows an embodiment in which a circumferential edge tape R is sewn to the circumference of the protector P. This checks the movement of material foward the central deformed part and also permits the deformation of the central deformed part due to extension of material.

In the fifth invention to the seventh invention, too, the position of the rubber tubular body 5 opposite to a branch pipe can be varied by turning the rubber tubular body 5 and consequently residual distortion due to partial bulging of the rubber tubular body 5 can be levelled, but in this invention residual distortion is decreased owing to the existence of the protector P and durability of the rubber tubular body 5 is increased. In the embodiment, residual distortion of the rubber tubular body 5 is 1.0003 times as against 1.0467 times in the case where the protector does not exist and the section of the bulging part shows equal thickness.

## Claims

1. A pipe inner surface repairing apparatus of resin-coating type which is moved in a pipeline by remote control: comprising a pipeline inner wall repair device A which includes
a cylindrical body 1 of double wall structure having an inner tube 2 and an outer tube 3;
discs 4 fixed to both ends of the cylindrical body 1 by welding or other means;
an annular chamber C formed between the inner tube 2 and the outer tube 3;
a through-chamber D formed at the inner center side of the cylindrical body 1;
a rubber tubular body 5 clamped to each disc 4 by a band 6 to be united with the cylindrical body 1;
a pressuring chamber E formed between the rubber tubular body 5 and the outer tube 3 of the cylindrical body 1, said chamber E being heated by a heater 7 wound around the outer circumferential surface of the outer tube 3;
a thermo-sensor 8 provided in the annular chamber C;
a traction fitting 9 fixed to the disc 4; and
a control unit which maintains the ambient temperature of a mending material at the temperature of the specified range by measuring the ambient temperature of the mending material by the thermo-sensor 8 and by controlling heating by the heater 7, whereby the mending material is heated for a specified period of time to harden, while its temperature is maintained at the temperature of a specified range.

2. A method of repairing the pipe inner surface by resin coating by using a pipeline inner wall repair device which is movable in a pipeline and has a rubber tubular body which is expanded by supply of compressed air thereto and is pressed at its circumferential surface against the pipeline inner surface, a heater for heating said rubber tubular body and a thermo-sensor, comprising the steps of
fitting a mending material to the outer circumferential surface of said rubber tubular body;
moving said pipeline inner wall repair device in a pipeline by wire hauling to a broken part in the pipeline through the guidance of a television camera moving in the pipeline;
supplying compressed air to the rubber tubular body to expand it and to press the outer circumferential surface of the rubber tubular body, along with the mending material, against the inner wall of pipeline at the broken part;
heating the mending material for a specified period of time to harden, while measuring the ambient temperature of the mending material on said pipeline inner wall repair device and inputting measured temperatures in said control unit so as to control heating by the heater and maintain the mending material temperature at the temperature within the specified range.

3. The method of repairing the pipe inner surface by resin coating as defined in Claim 2, wherein an outside control unit is connected to the pipeline inner wall repair device by a cord with 5 core wires, of which three wires are for connecting the thermo-sensor to the control unit and the remaining two wires are for the heater.

4. A pipe inner surface repairing apparatus of resin coating type, whereby when a broken part in a pipeline is repaired by resin coating, a pipeline inner wall repair device having a rubber tubular body which expands by supply of compressed air thereto and presses at its circumferential surface against the pipeline inner surface and is fitted at its outer circumferential surface with a mending material is moved freely in a pipeline and the mending material is hardened by heating as it is pressed against the inner wall of pipeline at a repairing part or a broken part for resin coating repair,
characterized in that a surface heating body is embedded in the mending material and a connection terminal is exposed from an end portion of the mending material for connection of the surface heating body to a feed cable so that the mending material is heated directly by the surface heating body and the surface heating body remains at the repaired part coated with the mending material.

5. A method of repairing the pipe inner surface of resin coating type, wherein at the repairing work of the pipe inner surface with resin coating,
a pipeline inner wall repair device which has a rubber tubular body which expands by supply of compressed air thereto and presses at its circumferential surface against the pipeline inner surface is used,
after a mending material is fitted to the outer circumferential surface of the rubber tubular body, said pipeline inner wall repair device is moved to a broken part in the pipeline by the wire hauling through the guidance of a television camera moving in the pipeline, the rubber tubular body is expanded by supply of compressed air thereto and the outer circumferential surface of the rubber tubular body, along with the mending material, is pressed against the pipeline inner wall at the broken part, and
the mending material is hardened as it is pressed against the pipeline inner wall at the desired repairing part by heating the mending material for a specified period of time and thus the repairing work is finished,
characterized in that
the mending material in which a surface heating body which is connected to a feed cable through the medium of a connection terminal exposed from an end portion of the mending material is embedded is fixed to the outer circumferential surface of the rubber tubular body of said pipeline inner wall repair device,
the mending material is pressed against the pipeline inner wall at the desired repairing part by movement of said pipeline inner wall repair device and by expansion of the rubber tubular body due to supply of compressed air to the rubber tubular body,
the mending material is heated as it is pressed against the pipeline inner wall at the desired repairing part by supplying electricity to the surface heating body through the medium of a feed cable,
after the mending material was hardened by heating, the pipeline inner wall repair device is removed from the repaired part by releasing the connection between the feed cable and the surface heating body, and the surface heating body remains at the repaired part as it is embedded in the hardened mending material.

6. A pipe inner surface repairing apparatus of resin coating type, whereby when a broken part in a pipeline is repaired by resin coating, a pipeline inner wall repair device having a rubber tubular body which expands by supply of compressed air thereto and presses at its circumferential surface against the pipeline inner surface and is fitted at its outer circumferential surface with a mending material is moved freely in a pipeline and the mending material is hardened by heating as it is pressed against the inner wall of pipeline at a repairing part or a broken part for resin coating repair,
characterized in that a cylindrical body provided with a rubber tubular body in the pipeline inner wall repair device is rotatable in the pipeline by remote control.

7. A method of repairing the pipe inner surface of resin coating type, wherein at the repairing work of the pipe inner surface with resin coating,
a pipeline inner wall repair device which has a rubber tubular body which expands by supply of compressed air thereto and presses at its circumferential surface against the pipeline inner surface is used,
after a mending material is fitted to the outer circumferential surface of the rubber tubular body, said pipeline inner wall repair device is moved to a broken part in the pipeline by the wire hauling through the guidance of a television camera moving in the pipeline, the rubber tubular body is expanded by supply of compressed air thereto and the outer circumferential surface of the rubber tubular body, along with the mending material, is pressed against the pipeline inner wall at the broken part, and
the mending material is hardened as it is pressed against the pipeline inner wall at the desired repairing part by heating the mending material for a specified period of time and thus the repairing work is finished,
characterized in that
a cylindrical body of the pipeline inner wall repair device is operated by remote control so that the position of the mending material fitted to the outer circumferential surface of the rubber tubular body of the pipeline inner wall repair device in the direction of pipeline inner surface circumference is made optional.

8. A method of repairing the pipe inner surface of resin coating type, wherein at the repairing work of the pipe inner surface with resin coating,
a pipeline inner wall repair device which has a rubber tubular body which expands by supply of compressed air thereto and presses at its circumferential surface against the pipeline inner surface is used,
after a mending material is fitted to the outer circumferential surface of the rubber tubular body, said pipeline inner wall repair device is moved to a broken part in the pipeline by the wire hauling through the guidance of a television camera moving in the pipeline, the rubber tubular body is expanded by supply of compressed air thereto and the outer circumferential surface of the rubber tubular body, along with the mending material, is pressed against the pipeline inner wall at the broken part, and
the mending material is hardened as it is pressed against the pipeline inner wall at the desired repairing part by heating the mending material for a specified period of time and thus the repairing work is finished,
characterized in that
in fitting a mending material to the outer circumferential surface of the rubber tubular body of said pipeline inner wall repair device, a mending material with a deformed area and a pipeline inner wall repair device which is rotatable by remote control are used,
a television camera is inserted into a branch pipe and the pipeline inner wall repair device moved in the pipeline to a branch pipe connection part is rotated by remote control, while confirming the surface state of the mending material opposing the branch pipe connection part,
after confirming that the mending material fitted to the outer circumferential surface of the rubber tubular body of the pipeline inner wall repair device is located opposite to the branch pipe connection part by the television camera inserted in the branch pipe, the rubber tubular body is expanded by supply of compressed air thereto,
the deformed area of the mending material is protruded toward the side of the branch pipe by expansion of the rubber tubular body contacting the deformed area of the mending material and is pressed against the pipeline inner wall at a connection part between a main pipe and a branch pipe for resin coating.

9. A method of repairing the pipe inner surface of resin coating type, wherein at the repairing work of the pipe inner surface with resin coating,
a pipeline inner wall repair device which has a rubber tubular body which expands by supply of compressed air Thereto and presses at its circumferential surface against the pipeline inner surface is used,
after a mending material is fitted to the outer circumferential surface of the rubber tubular body, said pipeline inner wall repair device is moved to a broken part in the pipeline by the wire hauling through the guidance of a television camera moving in the pipeline, the rubber tubular body is expanded by supply of compressed air thereto and the outer circumferential surface of the rubber tubular body, along with the mending material, is pressed against the pipeline inner wall at the broken part, and
the mending material is hardened as it is pressed against the pipeline inner wall at the desired repairing part by heating the mending material for a specified period of time and thus the repairing work is finished,
characterized in that
in fitting a mending material to the outer circumferential surface of the rubber tubular body of said pipeline inner wall repair device, a mending material with a deformed area and a pipeline inner wall repair device which is rotatable by remote control are used,
a protector of knit structure is interposed between the mending material and the rubber tubular body,
the deformed area of the mending material is protruded toward the side of the branch pipe by expansion of the rubber tubular body contacting the deformed area of the mending material and is pressed against the pipeline inner wall at a connection part between a main pipe and a branch pipe for resin coating, and
the bulging deformation of the rubber tubular body opposite to the deformed area of the mending material is regulated to a specified limit by the protector of knit structure.
